# EUROPEAN PATENT APPLICATION

(11) **EP 3 444 515 A1**
(43) Date of publication of application: **20.02.2019**
(21) Application number: 17290104.3
(22) Date of filing: 16.08.2017
(51) Int. Cl.: F16L 33/207, F02M 35/10

(54) **AIR INTAKE SEALING JOINT ARRANGEMENT**

(71) Applicant: MANN + HUMMEL GMBH, 71636 Ludwigsburg (DE)
(72) Inventor: Foulboeuf, Gwenael, 53260 Entrammes (FR)
(74) Representative: Seyboth, Matthias

(57) **Abstract**

The present invention relates to an intake sealing joint arrangement (10) comprising a rigid tube (12) having a longitudinal axis (14) and a flexible hose (16) which is positioned on the rigid tube (12) with an end section (20) thereof, the end section (20) encompassing the rigid tube (12) in a radially outward direction. There is a fastening ring (18) provided for securing the flexible hose (16) on the rigid tube (12) in an tight manner, the fastening ring (18) being made in one piece and being of a closed annular design, wherein the fastening ring (18) has an annular bead (30) extending in a circumferential direction thereof which projects in a radially inward direction and by which the flexible hose (16) is secured to the rigid tube (12) in a radial press-fit. The invention further relates to a method of producing such an intake sealing joint arrangement (10).

## Description

### Technical field

The present invention relates to an air intake sealing joint arrangement. The invention further relates to a method for producing such an intake sealing joint arrangement.

### Background

US 2005/0230971 A1 describes a connecting joint for a a fluid, e.g. fuel, transport hose. On the inner surface of the hose body a laminated hard resin layer constitutes a barrier to fluids. A screw-operated clamping member clamps the hose body to a companion pipe which is inserted into the hose body. An annular groove is formed at the end of the resin layer, in which an elastic impermeable material is placed which is compressed by the companion pipe.

US 2016/0040635 A1 describes an adaptive air intake sealing joint with a molded elastomeric duct body having standing ribs which provide a continuous and sufficient contact force across the face of a joint of an adjoining duct body. A clamp secured to the duct causes the ribs to provide a sufficient contact force across a seal surface to prevent leakage. A further air intake sealing joint has been disclosed, for instance, in WO 2013/157296 A1.

The known sealing joints can be realized only at comparatively high costs and still have a rather limited sealing capacity, in particular when exposed to varying ambient temperatures and after prolonged use.

### Disclosure of the invention

It is therefore the object of the present invention to provide a compact air intake sealing joint arrangement which allows for a highly reliable sealing even after prolonged use and when exposed to varying ambient temperatures of an engine compartment of a motor vehicle and which can be produced in an easy and cost efficient manner. Another object of the present invention is to provide a method for producing such an air intake sealing joint arrangement.

The object of the invention concerning the air intake sealing joint arrangement is solved by an air intake sealing joint arrangement according to claim 1. The method of producing such an air intake sealing arrangement shows the features as given in claim 11. Preferred embodiments of the invention are subject of the dependent claims and the description.

The air intake sealing joint arrangement according the invention may be used, for instance, in air intakes for an internal combustion engine of vehicles such as, for instance, cars and trucks. The air intake arrangement comprises a rigid tube having a longitudinal axis, a flexible hose and a fastening ring. The flexible hose is positioned on the rigid tube with an end section thereof. The end section encompasses the rigid tube in a radially outward direction. The fastening ring secures the flexible hose on the rigid tube in an (preferably air-) tight manner. The fastening ring, according to the invention, is made in one piece and is of a closed annular design. The fastening ring has in other words, in a circumferential direction thereof, no end portions and no gaps formed in between such end portions. Furthermore, the fastening ring has an annular bead. The said annular bead extends in circumferential direction of the fastening ring and projects in a radially inward direction from the fastening ring. The flexible hose is secured to the rigid tube in a radial press-fit by the fastening ring. Due to the closed annular design and the circular bead of the fastening ring, the fastening ring can provide very or extremely high clamping forces to the flexible hose. The clamping forces can be applied to the flexible hose in the circumferential direction thereof very uniformly such that the flexible hose and the rigid pipe show an evenly distributed contract pressure in the circumferential direction thereof. An unwanted leakage of air due to an unavoidable shrinkage of the raw material of the flexible hose over the course of time can be compensated by the improved radial compression of the flexible hose by means of the fastening ring. The air intake sealing joint arrangement further allows for a clamp or fastening design which is compact, in particular with regards to the rather confined engine compartment of modern vehicles. Further, the air intake sealing joint arrangement can be produced at rather low costs due to its simple design.

In an advantageous embodiment of the air intake sealing joint arrangement, the fastening ring has several webs which are each extending in a longitudinal direction and by which both lateral wall sections of the annular bead facing each other are connected to one another. The webs may also interconnect a bottom wall section with the said lateral wall sections of the bead. Overall, the said webs allow for a bigger load stability of the fastening ring and decreases the risk of an unwanted deformation of the fastening ring which could result in a decreased clamping force.

In an advantageous embodiment of the air intake sealing joint arrangement, one end portion, preferably both end portions, of the fastening ring is/are folded over. The edges of the fastening ring can thereby be rendered less sharp so that an unwanted damage to the flexible pipe, other components e.g, in the engine compartment of a car or truck, as well as personal injuries can be avoided during installation or use of the sealing joint arrangement. Also, the fastening ring may thereby be threaded more easily on the flexible pipe without catching on the pipe.

According to a further preferred embodiment of the invention, there is a protuberance positioned on the outer surface of the rigid tube which, in the mounted state of the air intake sealing joint arrangement, is encompassed by the flexible hose. Advantageously, the protuberance prevents the flexible hose from sliding off the rigid tube in an axial direction additionally to the clamping forces already provided by the fastening ring. The fastening ring and the protuberance may be positioned axially spaced apart from each other.

According to a further preferred embodiment of the air intake sealing joint arrangement, the protuberance has a ring-like structure. The flexible hose can thus be held in position on the rigid tube in a rotationally symmetric way by the protuberance.

For an even further improved mechanical and leak proof attachment of the flexile hose on the rigid tube, the said rigid tube may be provided with a further or second protuberance. In this case, the protuberances of the rigid tube are spaced from one another in an axial direction. Preferably, the circular bead of the fastening ring projects in between the two protuberances of the rigid tube in a radial direction. The two protuberances both may have a (closed) ring-like structure.

In a further embodiment of the invention, there is a reinforcement sleeve positioned inside the rigid tube for reinforcing the rigid tube, in particular in the region of the fastening ring and the aforementioned protuberance(s), if existent. The rigid tube can be supported by such a reinforcement ring in a radially inward direction to prevent the rigid tube from being bent or compressed in a radially inward direction by the forces of the fastening ring. This allows for very high clamping forces of the fastening ring. Further, by use of such a reinforcement sleeve, the rigid pipe may be realized with a decreased wall thickness which allows for a further reduction of the overall weight of the rigid pipe.

In an advantageous embodiment of the air intake sealing joint arrangement, the reinforcement sleeve has a higher compressive strength than the rigid tube and preferably a smaller wall thickness than the rigid tube. The higher the compressive strength of the reinforcement sleeve, the better it can resist the pressure of the fastening ring. With a smaller wall thickness than the rigid tube, the reinforcement sleeve can be positioned inside the rigid tube without overly jeopardizing the internal cross section of the rigid tube.

In an advantageous embodiment of the air intake sealing joint arrangement, the reinforcement sleeve is, at least partially, arranged in a recess of the interior wall of the rigid tube. The said recess preferably allows for a form fit arrangement of the reinforcement sleeve in the interior wall of the rigid tube. Further, a step on the interior surface of the rigid tube which may hinder an (preferably laminar) airflow inside the rigid tube and cause an unwanted pressure drop can thereby be minimized or even prevented.

According to the invention, the flexible hose can be made from rubber or another suitable elastomeric material. These rubber and other elastomeric materials allow for a simplified installation of the air intake sealing arrangement in an engine compartment of a car or truck. It is to be understood, that the elastomeric material may comprise further additives or support elements such as fibers or a textile inlay.

In an advantageous embodiment of the air intake sealing joint arrangement, the annular bead has a bell curve-shaped, a rectangular or a V-shaped cross-section. Advantageously, the cross-section of the annular bead can be adapted for specific applications.
The sealing joint arrangement may also be used as in a cooling water circuit or oil circuit or the like as can be found in motor vehicles, in particular with a combustion engine, such as cars, trucks and other utility vehicles.

According to the invention, the method of producing an air intake sealing joint arrangement as described above comprises the following steps:
- Positioning the flexible hose with one of its end sections on the rigid tube such that the flexible hose encompasses the rigid tube in a radially outward direction,
- Positioning the fastening ring on the flexible hose; and
- Crimping the fastening ring to form the annular bead which projects in a radially inward direction and by which the flexible hose is secured to the rigid tube in a radial press-fit.

Thereby, the air intake sealing joint arrangement can be manufactured in an easy and cost efficient way. The crimping, that is the plastic deformation of the fastening ring in a radial direction with respect to its central axis, allows for a very uniform distribution of clamping forces along the circumference of the fastening ring. The sealing capability of the air intake sealing joint can thereby be greatly improved. It needs to be noted, that the fastening ring may be positioned on the flexible hose before the flexible hose is positioned with one of its end sections on the rigid tube.

According to a further embodiment of the invention, several webs are formed during crimping of the fastening ring which each extend in a longitudinal direction and by which both lateral wall sections of the annular bead facing each other and the bottom wall section of the annular bead are connected to one another. Advantageously, the webs and the annular bead of the fastening ring are formed simultaneously.

According to the invention, prior to placing the fastening ring on the flexible hose at least one end portion, preferably both end portions, of the fastening ring can be folded over.

According to the invention, a reinforcement sleeve may be positioned inside the rigid tube before crimping the fastening ring. The reinforcement sleeve may be positioned in a recess of the interior wall of the rigid pipe to not overly obstruct the internal cross-section of the rigid pipe.

The crimping of the fastening ring, according to the invention, may be achieved, e.g. by use of a purely hand-operated or, rather, by means of a hydraulically or electrically driven crimping tool.

### Brief description of drawings

Other advantages and features of the invention will be appreciated from the following description of embodiments of the invention with reference to the figures of the drawings, which show significant details, and from the claims. The individual features may each be carried out individually or carried out together in any combination in variants of the invention.
- Figure 1: shows an air intake sealing joint arrangement comprising a rigid tube with a longitudinal axis, a flexible hose and a crimped fastening ring having a closed annular profile by which the flexible hose is secured to the rigid tube in a radially press-fitted manner;
- Figure 2: shows a partial longitudinal cross-section through the air intake sealing joint arrangement according to Fig. 1;
- Figure 3: shows a partial longitudinal cross-section through a further air intake sealing joint arrangement;
- Figure 4: shows the fastening ring of the air intake sealing arrangement according to Fig. 1 before crimping; and
- Figure 5: shows a block diagram of a method for manufacturing an air intake sealing joint arrangement as shown in Fig. 1.

### Detailed description

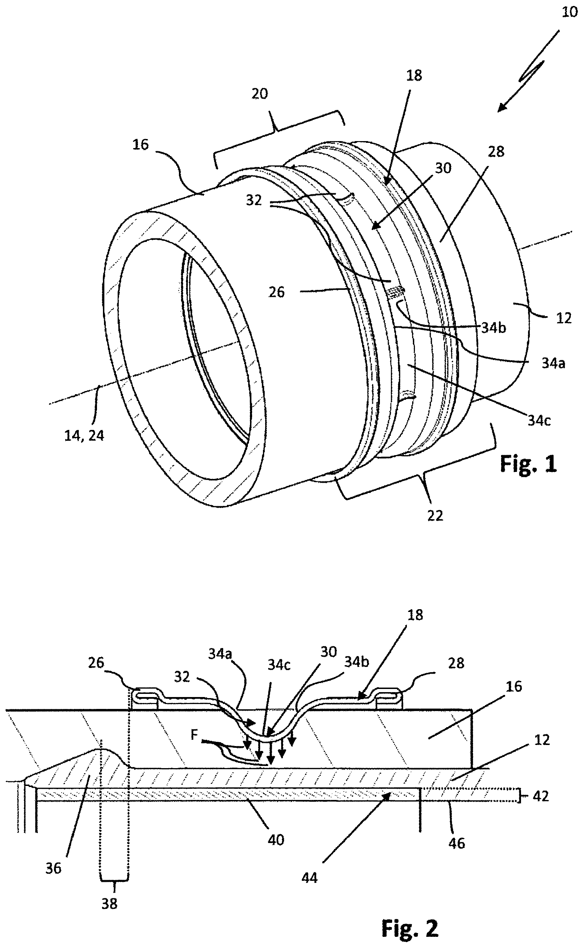

**Fig. 1** shows an air intake sealing joint arrangement **10** which can be used in an air intake (not shown) for guiding air to a combustion engine of a vehicle such as a car or a truck. The air intake sealing joint arrangement 10 comprises a rigid tube **12** having a longitudinal axis **14,** a flexible hose **16** and a fastening ring **18.** The rigid tube 12 may be made of metal or a resin material. The flexible hose 16 may be made of rubber or another suitable elastomeric or compound elastomeric material. It is to be understood, that the material of the flexible hose 16 may also comprise fibers and the like for reinforcement purposes. The flexible hose 16 has a first end section **20** which is positioned on a second end section **22** of the rigid tube 12 such that the first end section 20 of the flexible hose 16 encompasses the rigid tube 12 circumferentially in a radially outward direction. The rigid tube 12 thus partially extends into the flexible hose 12. The rigid tube 12 and the flexible hose 16 are thus arranged coaxially with respect to the longitudinal axis 14. The fastening ring 18 encompasses the flexible hose 16 in a radially outer direction. The flexible hose 16 is thus placed between the fastening ring 18 and the rigid tube 12.

The fastening ring 18 is preferably made of metal and has a central axis which is denominated **24** in Fig. 1. The said central axis 24 coincides with the longitudinal axis 14 of the rigid tube 12. It is to be noted that the fastening ring 18 is made in one piece and is of a closed annular design. The fastening ring 18 thus has no gaps which extend in a circumferential direction or an axial direction from the first to the second end portion **26, 28** thereof. The fastening, in other words, is designed as a closed circular profile.

The fastening ring 18 has an annular bead **30.** The said annular bead **30** projects from the fastening ring 18 in a radially inward direction towards the rigid tube 16. The annular bead 30 thereby locally compresses the material of the flexible hose 12 in a radial direction such that the flexible hose 16 is secured to the rigid tube in a radial press-fit. The flexible hose 16 is thereby seated on the rigid tube 12 in an air-tight manner.

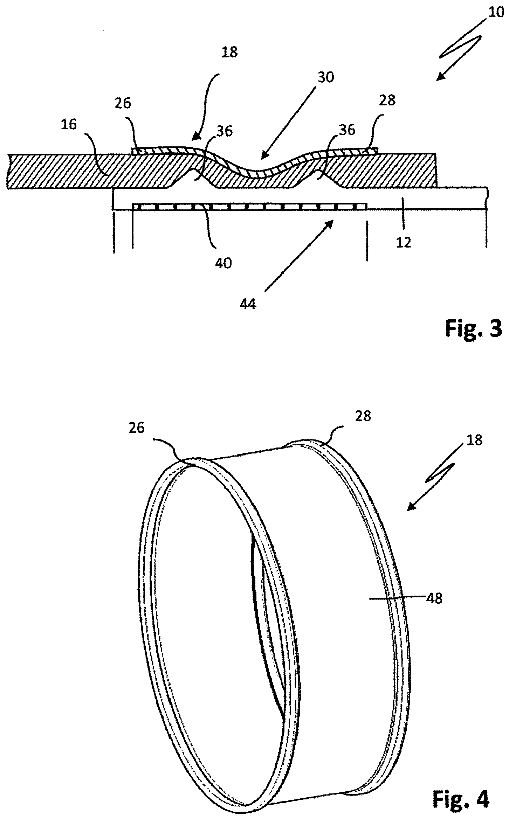

As can be seen from Fig. 1, the fastening ring has several webs **32** which each extend in an axial direction with respect to the longitudinal axis 14 of the rigid tube 12 or the central axis 24 or the fastening ring 18, respectively. Each of the webs 32 connects both lateral wall sections **34a, 34b** of the annular bead (see Figure 3) facing each other as well as the bottom wall section **34c** of the annular bead 30. Web 32 dimensions and shape actually depend on clamping or crimping parameters during crimping of the fastening ring 18.

**Fig. 2** shows a partial longitudinal cross-section through the air intake sealing joint arrangement 10 of Fig. 1. The annular bead 18 merely by way of non-limiting example, has a bell curve like cross-sectional shape. It is to be understood, that the bead may alternatively have, for instance, a rectangular or a triangular cross-sectional shape.

As can be seen in Fig. 2, both end portions 26, 28 of the fastening ring can be folded over. By this, the material of the fastening ring 18 is doubled in the region of the end portions 26, 28 of the fastening ring 18. The risk of damage to the rubber hose 16 or of personal injury is thereby greatly reduced. Also, the fastening ring 18 is thereby reinforced in the region of the first to the second end portion 26, 28 thereof.

An end section 26 of the flexible hose 12 is positioned on the rigid tube. The fastening ring 14 which is placed on the flexible hose 12 exerts a (clamping) force **F** shown by arrows which is directed in a radial direction and by which the flexible hose is pressed against the rigid tube 12. The force F has a maximum in the middle of the bead (at its apex) and decreases in both axial directions therefrom. There is a ring-shaped protuberance **36** positioned at the end of the rigid tube 16 which serves for an axially non-displaceable fixation of the flexible hose 18 with respect to the rigid tube 12. The flexible hose 12 encompasses the said protuberance 36 in a radial direction with the protuberance 36 compressing the material of the flexile hose 18. By this, the flexible hose and the rigid tube are interlocked. Of note, the bead of the fastening ring 18 is positioned at an axial distance **38** towards the second end section 22 of the rigid tube with respect to the protuberance 36. The said distance 38 need not be fixed.

The rigid tube 16 may comprise a reinforcement sleeve **40** which is placed inside the rigid tube 12, in particular in the region of the end section 22 thereof, and which is at least partially encompassed by the fastening ring 12. Thereby, the rigid tube 12 can be further reinforced against an unwanted deformation by the radially directed force F exerted by the fastening ring 18. The reinforcement sleeve 40 preferably has a smaller wall thickness **42** as compared to the rigid tube 16 such as to not overly narrow the internal cross-section of the rigid tube 12. Thereby, an unwanted increase of resistance of air flow (as well as a turbulent air flow) through the rigid tube 12 can be prevented. Preferably, the reinforcement sleeve 40 has a higher compressive strength than the rigid tube 16. As to this, the reinforcement ring may be made of a resin, e. g. a so-called duroplast, or of metal. The reinforcement ring 40 may be glued to the rigid tube 12. Also, the rigid tube 12 may be made of an overall smaller wall thickness thereby overall decreasing the weight and material usage for production of the air intake sealing joint arrangement 10. Furthermore, the reinforcement sleeve 40 may be placed in a recess **44** of the interior wall surface **46** of the rigid tube 16.

According to **Fig. 3****,** the rigid tube 12 may be provided with two protuberances 36 which are projecting radially outward from the rigid tube 12. The said protuberances 36 are spaced apart from one another in an axial direction and may each have a circular design. The annular bead 30 of the fastening ring 18 preferably projects in between the said protuberances 36 in a radial direction thereby allowing for an even further improved mechanical and leak proof attachment of the flexible hose 16 to the rigid tube 12. Further, the end portions 26, 28 of the fastening ring 18 can be realized without being folded over, that is with a straight axial extension.

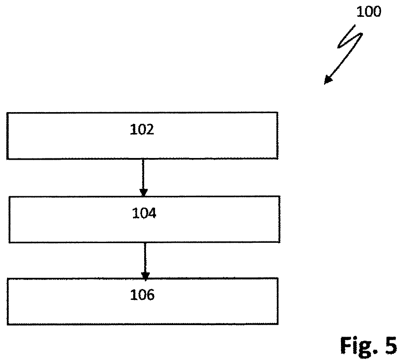

The method 100 for forming an air intake sealing joint arrangement as described above will be explained in further detail with additional reference to **Figs. 4** and **5****.**

In step **102,** the flexible hose 16 is positioned with its first end section 20 on the rigid tube 12 such that the flexible hose 16 encompasses and seats on the rigid tube 12 in a radially outward direction. In a further step **104**, the fastening ring is positioned on the flexible hose 16. This may be done prior or after step 102. In this stage, the fastening has a cylindrically shaped outer surface **48** as is shown in Figure 4. In a last step **106,** the fastening ring 18 is crimped to form the annular bead 30 which projects in a radially inward direction and by which the flexible hose 16 is secured to the rigid tube 12 in a radial press-fit. The crimping 102 of the fastening ring is performed with a crimping tool not further shown in the drawings.

## Claims

1. Air intake sealing joint arrangement (10) comprising:
- a rigid tube (12) having a longitudinal axis (14),
- an flexible hose (16) which is positioned on the rigid tube (12) with an end section (20) thereof, the end section (20) encompassing the rigid tube (12) in a radially outward direction,
a fastening ring (18) for securing the flexible hose (12) on the rigid tube (16) in a tight manner, the fastening ring (18) being made in one piece and being of a closed annular design,
wherein the fastening ring (18) has an annular bead (30) extending in a circumferential direction thereof which projects in a radially inward direction and by which the flexible hose (12) is secured to the rigid tube (16) in a radial press-fit.

2. Air intake sealing joint arrangement according to claim 1, **characterized in that** the fastening ring (18) has several webs (32) extending in a longitudinal direction and by which both lateral wall sections (34a, 34b) of the annular bead (30) facing each other, and, preferably the bottom wall section (34c) of the annular bead (30), are connected to one another.

3. Air intake sealing joint arrangement according to claim 1 or 2, **characterized in that** at least one end portion (26, 28), preferably both end portions (26, 28), of the fastening ring (18) is/are folded over.

4. Air intake sealing joint arrangement according to any one of the preceding claims, **characterized in that** a protuberance (36) is positioned on the outer surface at the end of the rigid tube (12) which is encompassed by the flexible hose (12).

5. Air intake sealing joint arrangement according to claim 4, **characterized in that** the protuberance (36) has a ring-like structure.

6. Air intake sealing joint arrangement according to any one of the preceding claims, **characterized in that** there is a reinforcement sleeve (40) positioned inside the rigid tube (12) to reinforce the end section (22) of the rigid tube (12) in the region of the fastening ring (18).

7. Air intake sealing joint arrangement according to claim 6, **characterized in that** the reinforcement sleeve (40) has a higher compressive strength and preferably a smaller wall thickness than the rigid tube (12).

8. Air intake sealing joint arrangement according to claim 6 or 7, **characterized in that** the reinforcement sleeve (40) is, at least partially, arranged in a recess (44) of the interior wall surface (46) of the rigid tube (12).

9. Air intake sealing joint arrangement according to any one of the preceding claims, **characterized in that** the flexible hose (16) is made from rubber or another elastomeric or compound elastomeric material.

10. Air intake sealing joint arrangement according to any one of the preceding claims, **characterized in that** the annular bead (30) has a bell curve-shaped, a rectangular or a V-shaped cross-sectional shape.

11. Method (100) of producing an air intake sealing joint arrangement (10) according to one of the preceding claims, comprising the following steps:
• Positioning (102) the flexible hose (16) with one of its end sections (20) on the rigid tube (12) such that the flexible hose (16) encompasses the rigid tube (12) in a radially outward direction,
• Positioning (104) the fastening ring (18) on the flexible hose (16);
• Crimping (106) the fastening ring (18) to form the annular bead (30) which projects in a radially inward direction and to secure the flexible hose to the rigid tube (12) in a radial press-fit.

12. Method according to claim 11, **characterized in that** during crimping of the fastening ring (18), several webs (32) are formed on the fastening ring, which each extend in a longitudinal direction and by which both lateral wall sections (34a, 34b) of the annular bead (30) facing each other and, preferably the bottom wall section (34c) of the annular bead (30), are connected to one another.

13. Method according to claim 11 or 12, wherein prior to placing the fastening ring (14) on the flexible hose (12) at least one end portion (26, 28), preferably both end portions (26, 28), of the fastening ring (18) is/are folded over.

14. Method according to any one of the preceding claims 11 to 13, **characterized in that** a reinforcement sleeve (40) is positioned inside the rigid tube (12) before crimping the fastening ring (18).
